(19) Europäisches Patentamt
European Patent Office
Office européen des brevets

(11) Veröffentlichungsnummer: **0 433 739 B1**

# (12) EUROPÄISCHE PATENTSCHRIFT

(45) Veröffentlichungstag der Patentschrift: **06.04.94**

(21) Anmeldenummer: **90123028.4**

(22) Anmeldetag: **01.12.90**

(51) Int. Cl.5: **C08L 101/00**, C08K 13/04, //(C08K13/04,5:07,5:41,5:3475, 7:20)

## (54) Polymergranulat mit verbesserter Verarbeitbarkeit.

(30) Priorität: **14.12.89 DE 3941280**

(43) Veröffentlichungstag der Anmeldung:
**26.06.91 Patentblatt 91/26**

(45) Bekanntmachung des Hinweises auf die Patenterteilung:
**06.04.94 Patentblatt 94/14**

(84) Benannte Vertragsstaaten:
**BE DE ES FR GB IT NL**

(56) Entgegenhaltungen:
**EP-A- 0 070 539**
**EP-A- 0 343 606**
**FR-A- 1 512 082**

**NTIS TECH. NOTES, 1. April 1989, Seite 309, Springfield, VA, US; "Additivesimprove processing of polyimides"**

**CHEMICAL PATENTS INDEX, BASIC ABSTRACTS JOURNAL, section A, Woche 8808, 20.April 1988, Accession Nr. 88-053844/08, Derwent Publications Ltd, London, GB;& JP-A-63 010 630**

(73) Patentinhaber: **BASF Aktiengesellschaft**
**Carl-Bosch-Strasse 38**
**D-67063 Ludwigshafen(DE)**

(72) Erfinder: **Ittemann, Peter, Dr.**
**Stettiner Strasse 10 a**
**W-6800 Mannheim 31(DE)**
Erfinder: **Heinz, Gerhard, Dr.**
**Im Vogelsang 2**
**W-6719 Weisenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 433 739 B1

## Beschreibung

Die Erfindung betrifft gut verarbeitbare Polymergranulate auf der Basis von Polyarylethersulfonen, Polyaryletherketonen, Polyimiden, Polyamidimiden oder Polyetherimiden oder deren Mischungen, die faser- oder teilchenförmige Füllstoffe oder deren Mischungen enthalten können.

Darüber hinaus betrifft die Erfindung die Verwendung der erfindungsgemäßen Polymergranulate zur Herstellung von Fasern, Folien, Formkörpern und Verbundwerkstoff sowie aus dem Polymergranulat hergestellte Formkörper.

Polyarylethersulfone, Polyaryletherketone, Polyimide, Polyetherimide und Polyamidimide sind durch ihre hohe Temperaturstandfestigkeit für viele Anwendungen interessant. Mischungen aus dieser Polymeren und p-Quater phenyl derivaten sind in der EP-A-343606 beschrieben. Bedingt durch deren hohen Schmelz- oder Erweichungspunkt muß die übliche thermoplastische Verarbeitung bei hohen Temperaturen durchgeführt werden. Selbst dann ist die Schmelzeviskosität häufig so hoch, daß - insbesondere bei höhermolekularen Produkten - Probleme bei der Verarbeitung auftreten können (z.B. hohe Leistungsaufnahme des Extruders). Dies gilt insbesondere dann, wenn bei der Verarbeitung gleichzeitig Füllstoffe in größeren Mengen eingearbeitet werden sollen. Dabei ist häufig eine ungleichmäßige Einarbeitung der Füllstoffe oder eine unbefriedigende Oberfläche der extrudierten bzw. spritzgegossenen Formkörper zu beobachten.

Aufgabe der Erfindung war es daher, ein Polymergranulat mit verbesserter Verarbeitbarkeit zur Verfügung zu stellen, welches bei niedrigeren Temperaturen oder geringerer Leistungsaufnahme verarbeitet werden kann, und in welches Füllstoffe in größeren Mengen leichter eingearbeitet werden können.

Diese Aufgabe wird erfindungsgemäß gelöst durch Vormischungen, die enthalten

A) 40 - 99,95 Gew.-% eines Polymergranulats auf der Basis eines Polyarylethersulfons, Polyaryletherketons, Polyimids, Polyamidimids oder Polyetherimids oder deren Mischungen,

B) bis zu 50 Gew.-% faser- oder teilchenförmige Füllstoffe oder deren Mischungen,

und

c) 0,05 - 10 Gew.-% einer Verbindung der allgemeinen Formel X

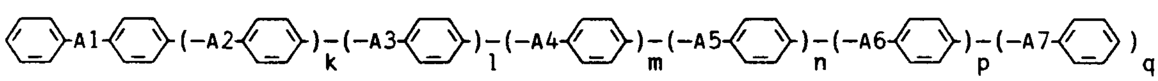

(X)

wobei A1, A2, A3, A4, A5, A6 und A7 gleich oder verschieden und unabhängig voneinander einen Rest der Formel

-CO-, -O-, -S-, $-SO_2-$, $-C(CH_3)_2-$,

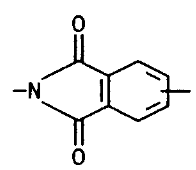

oder

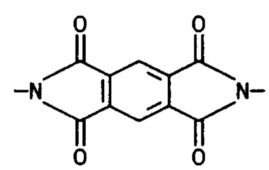

oder eine chemische Bindung bedeuten, wobei wenigstens einer der Reste A1 bis A7 keine chemische Bindung bedeutet, und k, l, m, n, p und q jeweils den Wert 0 oder 1 haben oder deren am aromatischen Kern substituierten $C_1$-$C_8$-Alkyl-, $C_1$-$C_8$-Alkoxy- oder Cyano-Derivaten,

oder der allgemeinen Formel Y

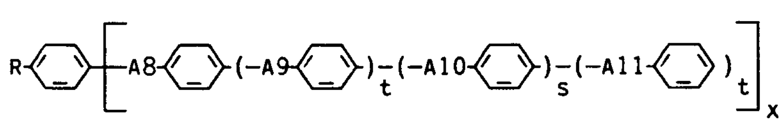

(Y)

wobei R für eine $C_1$-$C_8$-Alkylgruppe, eine $C_1$-$C_8$-Alkoxygruppe oder eine Cyanogruppe steht, A8, A9, A10 und A11 die gleiche Bedeutung wie A1 bis A7 haben, wobei wenigstens einer der Reste A8 bis A11 keine chemische Bindung bedeutet, r, s, t den Wert 0 oder 1 haben und x den Wert 2,3 oder 4 hat,

oder deren Mischungen.

Die für die Granulate A) verwendeten hochtemperaturbeständigen Polymere aus der Gruppe der Polyarylethersulfone, Polyaryletherketone, Polyimide, Polyetherimide und Polyamidimide sind an sich bekannt, d.h. in der Literatur beschrieben oder kommerziell erhältlich, so daß sich hier nähere Angaben erübrigen.

Bevorzugt werden die nachfolgend näher beschriebenen Polyaryletherketone, Polyarylethersulfone und Polyetherimide.

Polyaryletherketone sind z.B. die in der US-PS 4 320 224 (EP 1879) oder der EP-A-265 842 beschriebenen. Entsprechend der EP-A-265 842 haben die Polyaryletherketone vorzugsweise wiederkehrende Einheiten der Formeln I und/oder II

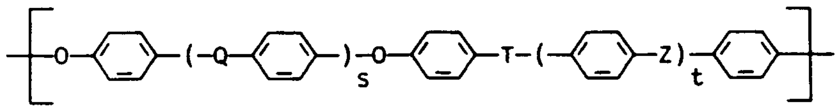
I

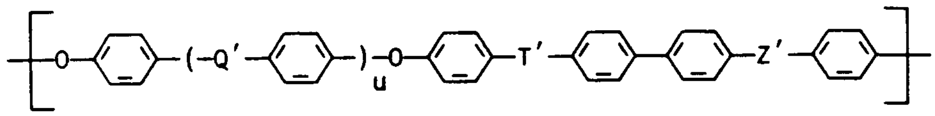
II

oder Einheiten deren kernsubstituierter $C_1$-$C_6$-Alkyl-, $C_1$-$C_6$-Alkoxy-, Phenyl-, Chlor- oder Fluorderivate, wobei Q, Q', T, T', Z und Z' jeweils -CO-, CR'R'', eine chem. Bindung oder -O- sein können und mindestens einer der Substituenten Q, T und Z bzw. Q', T' und Z' -CO- ist

R' und R'' jeweils Wasserstoffatome, $C_1$-$C_6$-Alkyl- oder Alkoxygruppen, Arylgruppen oder deren Fluor- oder Chlorderivate darstellen, und s, t und u jeweils den Wert 0 oder 1 haben.

Beispiele für Einheiten der allgemeinen Formel I und II sind:

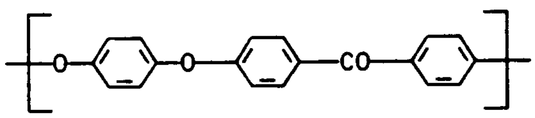
(I;1)

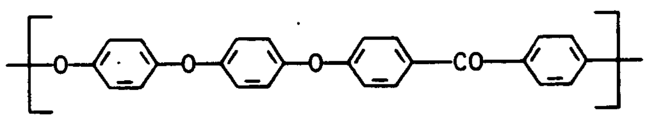
(I;2)

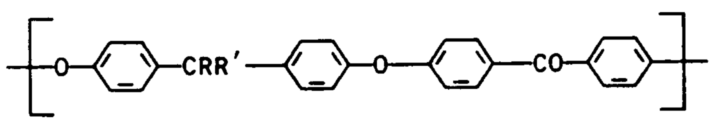
(I;3)

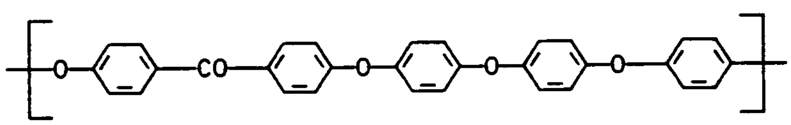
(I;4)

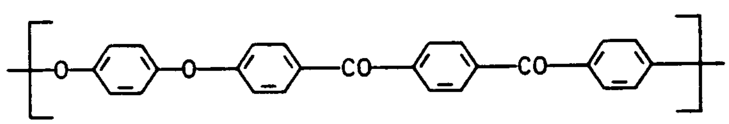
(I;5)

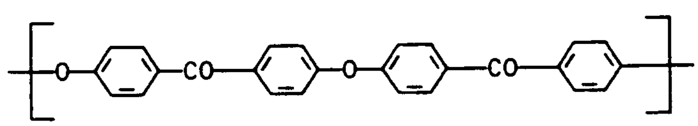
(I;6)

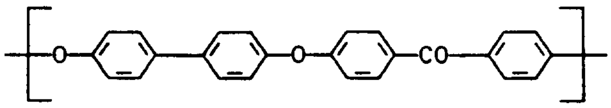

( I;7)

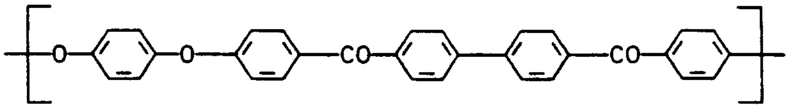

(II;1)

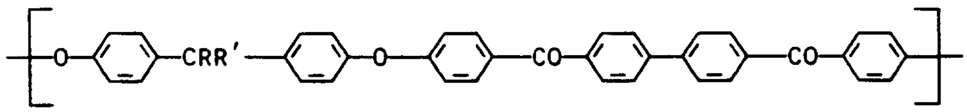

(II;2)

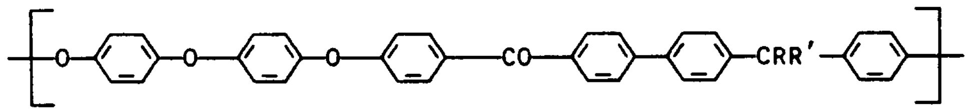

(II;3)

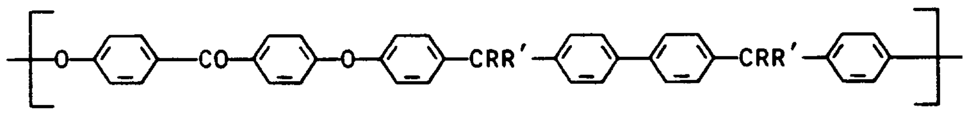

(II;4)

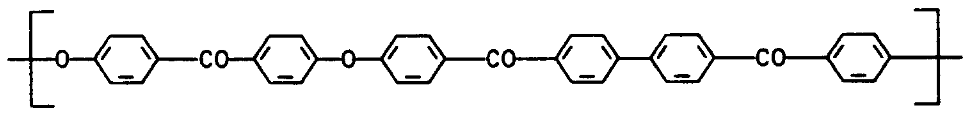

(II;5)

wobei diese Auswahl nur stellvertretend für die unter die allgemeinen Formeln I und II fallenden Einheiten steht. Über die Substituenten Q, T, Z bzw. Q', T' und Z' und die Parameter s, t und u lassen sich die vorstehenden Beispiele wie folgt beschreiben:

| | s | t | Q | T | Z |
|---|---|---|---|---|---|
| I;1 | 0 | 0 | - | -CO- | - |
| I;2 | 1 | 0 | -O- | -CO- | - |
| I;3 | 1 | 0 | -CRR'- | -CO- | - |
| I;4 | 1 | 1 | -CO- | -O- | -O- |
| I;5 | 0 | 1 | - | -CO- | -CO- |
| I;6 | 1 | 0 | -CO- | -CO- | - |
| I;7 | 1 | 0 | chem. Bdg. | -CO- | - |

| | u | Q' | T' | Z' |
|---|---|---|---|---|
| II;1 | 0 | - | -CO- | -CO- |
| II;2 | 1 | -CRR'- | -CO- | -CO- |
| II;3 | 1 | -O- | -CO- | -CRR'- |
| II;4 | 1 | -CO- | -CRR'- | -CRR'- |
| II;5 | 1 | -CO- | -CO- | -CO- |

Obwohl, wie bereits erwähnt, grundsätzlich beliebige Kombinationen der Substituenten Q, T und Z bzw. Q', T' und Z' möglich sind, werden im allgemeinen solche Einheiten bevorzugt, in denen T und Z bzw. T' und Z' gleich sind, da die entsprechenden Monomeren in der Regel leichter zugänglich sind.

Verfahren zur Herstellung derartiger Polyaryletherketone sind an sich bekannt und z.B. in der US-PS 4 320 224 (EP 1879), WO-A 84/03891, US-A-3 441 538, und der US-A-3 953 400 beschrieben. Grundsätzlich ist sowohl die nukleophile als auch die elektrophile Polykondensation möglich.

Für die Granulate A) ebenfalls einsetzbar sind Polyarylethersulfone.

Entsprechende Produkte sind an sich bekannt und kommerziell erhältlich. Nur beispielsweise sei hier auf Polyarylethersulfone mit wiederkehrenden Einheiten verwiesen, die man erhält, wenn man in den vorstehend für die Polyaryletherketone genannten Formeln -CO- durch $-SO_2-$ ersetzt. Verfahren zur Herstellung derartiger Produkte sind allgemein bekannt und z.B. in der US-PS 4 108 837 (DE-B-15 45 106), der US-PS 4 857 625 (EP-A-113 112) und der EP-A-185 130 beschrieben.

Die ebenfalls als Komponente A) verwendbaren Polyetherimide sind im wesentlichen aus wiederkehrenden Einheiten der Formel III

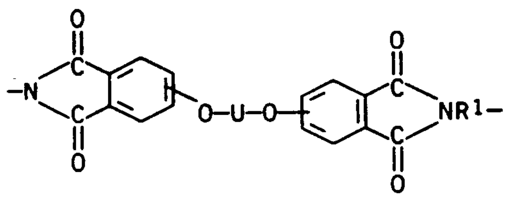

III

aufgebaut,
wobei U einen zweiwertigen aromatischen organischen Rest mit 6 bis 30 C-Atomen und $R^1$ einen zweiwertigen organischen Rest, bestehend aus

a) aromatischen Kohlenwasserstoffen mit 6 bis 20 C-Atomen und/oder deren halogenierten Derivaten,
b) Alkylenresten, Polydiorganosiloxanresten und Cycloalkylenresten mit bis zu 20 C-Atomen oder
c) Zweiwertigen Resten der Formel

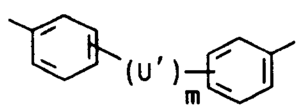

wobei -(U')-
-O- ,

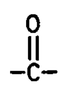 , 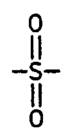 ,

-S- oder $-C_nH_{2n}-$ (n = 1 bis 5) ist und m einen Wert von 0,1 oder 2 hat, darstellen.

Besonders bevorzugt werden Produkte, in dem $R^1$ die vorstehend genannte Bedeutung hat und U

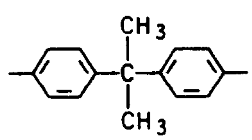

ist.

Verfahren zur Herstellung von Polyetherimiden sind z.B. aus der US-PS 3 875 116 (DE 23 63 785), der US-PS 3 847 869 (DE 24 37 286) und der US-PS 3 850 885 (DE 24 41 539) bekannt.

Es versteht sich, daß auch Mischungen aus zwei oder drei der vorstehend genannten hochtemperaturbeständigen Polymeren eingesetzt werden können.

Der Anteil der Polymeren d.h. Granulate an den erfindungsgemäßen Vormischungen beträgt 40 - 99,5, vorzugsweise 50 - 79,95 und insbesondere 50 - 69,95 Gew.-%, bezogen auf das Gesamtgewicht der Vormischung.

Als Komponente B können die erfindungsgemäßen Vormischungen oder Polymergranulate bis zu 50, vorzugsweise 5 - 45 und insbesondere 10 - 40 Gew.-% faser- oder teilchenförmige Füllstoffe oder deren Mischungen enthalten, wobei sich diese Menge auf die Vormischung bezieht.

Als verstärkend wirkende Füllstoffe seien beispielsweise Asbest, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmen E-Glasen mit einem Durchmesser von 5 - 200 $\mu$m, Vorzugsweise 8 - 50 $\mu$m eingesetzt werden können, wobei die faserförmigen Füllstoffe nach ihrer Einarbeitung vorzugsweise eine mittlere Länge von 0,05 - 1 mm, insbesondere 0,1 - 0,5 mm aufweisen.

Andere geeignete Füllstoffe sind beispielsweise Wollastonit, Calciumcarbonat, Glaskugeln, Quarzmehl, Silicium und Bornitrid oder Mischungen dieser Füllstoffe.

Glasfasern werden als Füllstoffe bevorzugt, insbesondere in Kombination mit Calciumcarbonat oder anderen Alkali- oder Erdalkalimetallcarbonaten.

Erfindungsgemäß enthalten die erfindungsgemäßen Vormischungen 0,05 - 10, vorzugsweise 0,05 - 2 und insbesondere 0,1 - 1 Gew.-% einer niedermolekularen organischen Verbindung entweder der allgemeinen Formel X

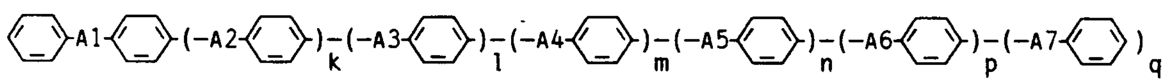

(X)

wobei A1 bis A7 gleich oder verschieden und unabhängig voneinander einen Rest der Formel
$-CO-$, $-O-$, $-S-$, $-SO_2-$, $-C(CH_3)_2-$,

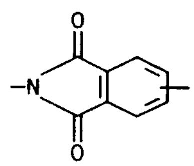

oder

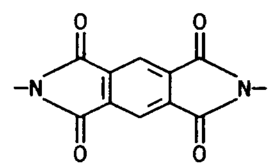

oder eine chemische Bindung bedeuten, wobei wenigstens einer der Reste A1 bis A7 keine chemische Bindung bedeutet, und k, l, m, n, p und q jeweils den Wert 0 oder 1 haben oder denen am aromatischen Kern substituierten $C_1$-$C_8$-Alkyl-, $C_1$-$C_8$-Alkoxy-oder Cyano-Derivaten,
oder der allgemeinen Formel Y

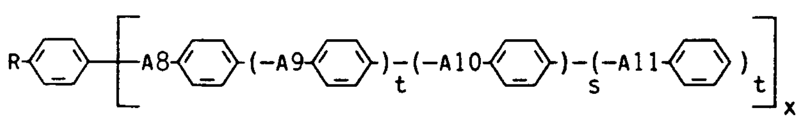

Y

wobei R für $C_1$-$C_8$-Alkyl, $C_1$-$C_8$-Alkoxy oder Cyano steht, A8 bis A11 die gleiche Bedeutung wie A1 bis A7 haben, wobei wenigstens einer der Reste A8 bis A11 keine chemische Bindung bedeutet, r, s, t den Wert 0 oder 1 haben und x den Wert 2, 3 oder 4 hat, oder deren Mischungen.

Nachstehend seien einige geeignete Verbindungen aufgeführt:

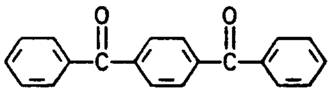

(X; 1)

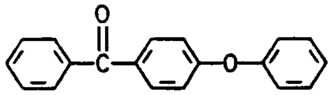

(X; 2)

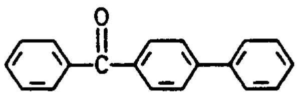

(X; 3)

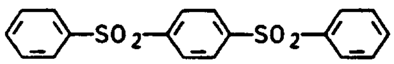

(X; 4)

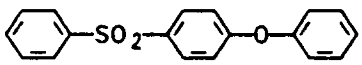

(X; 5)

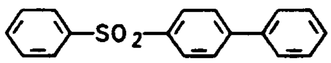

(X; 6)

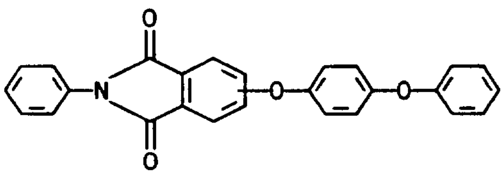

(X; 7)

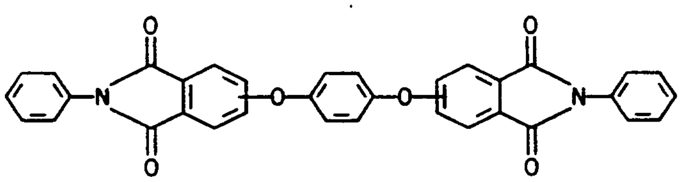

(X; 8)

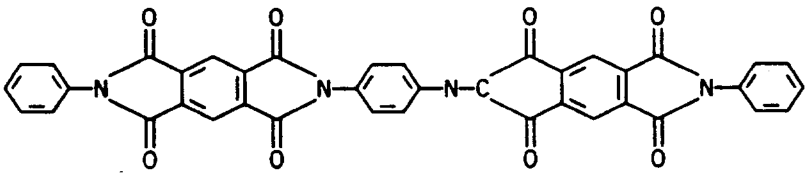

(X; 9)

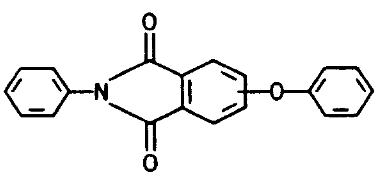

(X; 10)

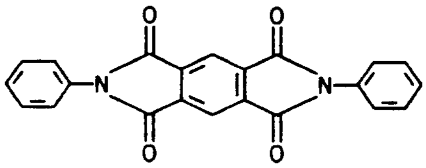

(X; 11)

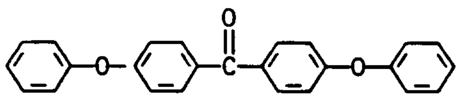

(X; 12)

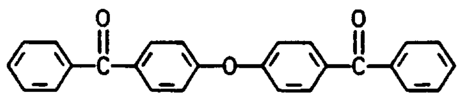

(X; 13)

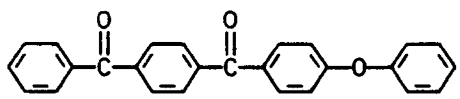

(X; 14)

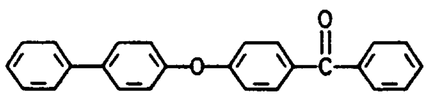

(X; 15)

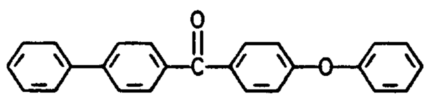

(X; 16)

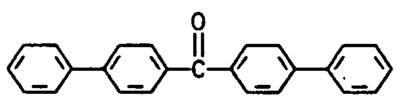

(X; 17)

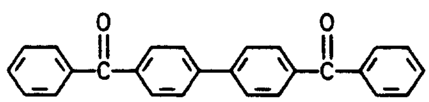

(X; 18)

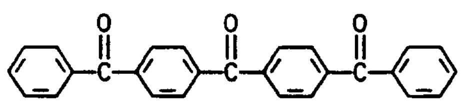

(X; 19)

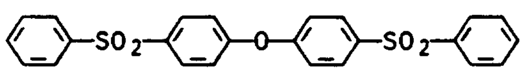

(X; 20)

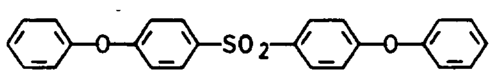

(X; 21)

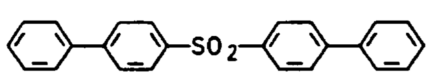

(X; 22)

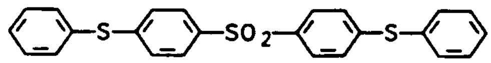

(X; 23)

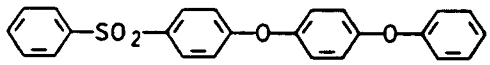

(X; 24)

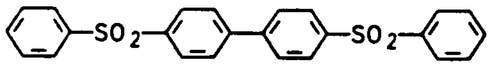

(X; 25)

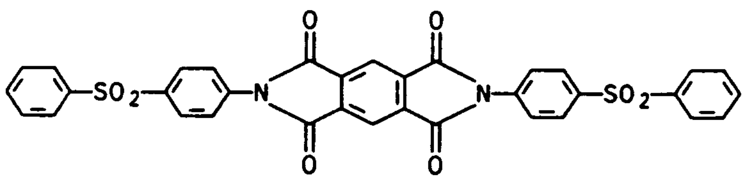

(X; 26)

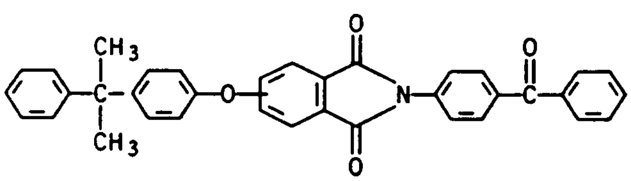

(X; 27)

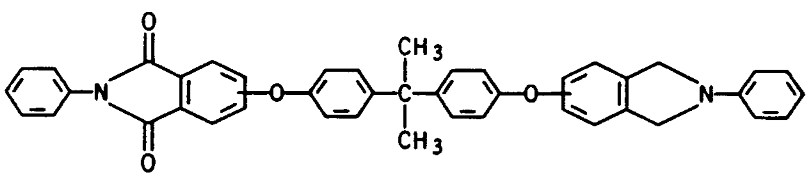

(X; 28)

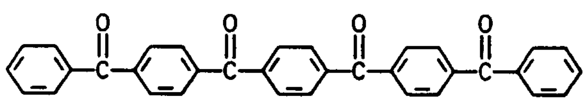

(X; 29)

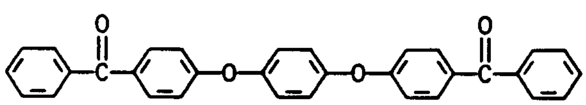

(X; 30)

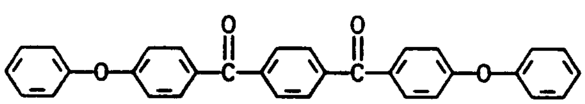

(X; 31)

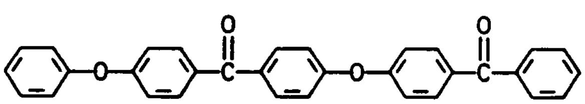

(X; 32)

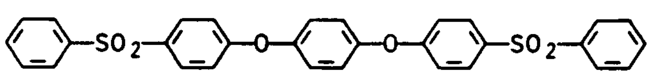

(X; 33)

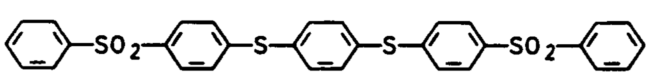

(X; 34)

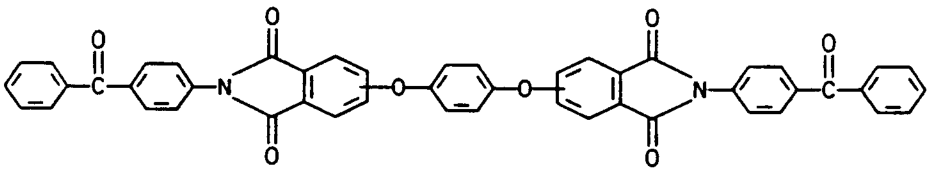

(X; 35)

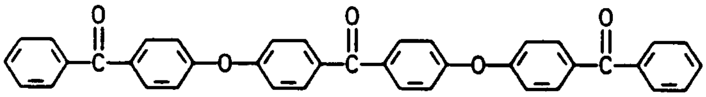

(X; 36)

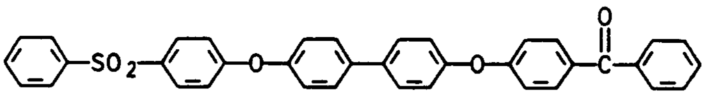

(X; 37)

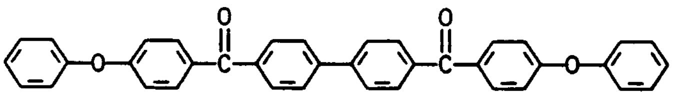

(X; 38)

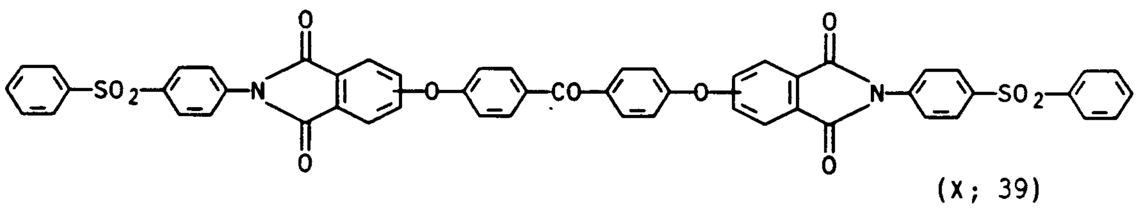

(X; 39)

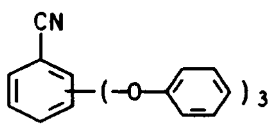

(Y; 1)

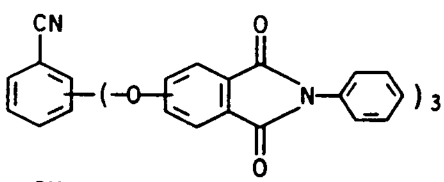

(Y; 2)

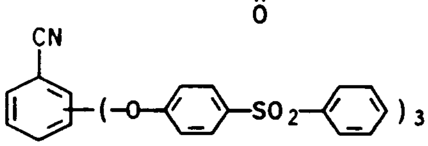

(Y; 3)

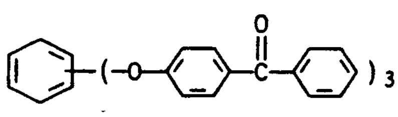

(Y; 4)

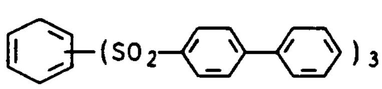

(Y; 5)

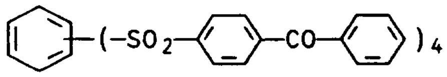 (Y; 6)

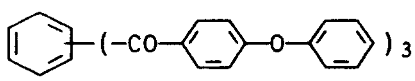 (Y; 7)

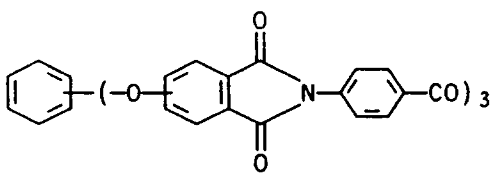 (Y; 8)

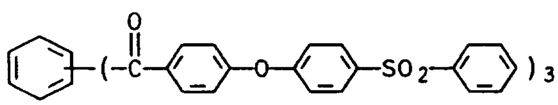 (Y; 9)

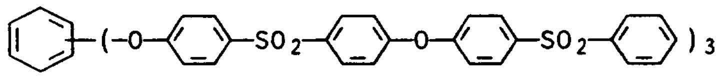 (Y; 10)

Die Verbindungen der allgemeinen Formeln X und Y sind im Handel erhältlich oder nach dem Fachmann bekannten Verfahren der organischen Chemie herstellbar, so daß sich nähere Angaben hierzu erübrigen.

Im allgemeinen werden Verbindungen der Formeln X oder Y bevorzugt, in denen die die aromatischen Ringe verknüpfenden Substituenten die gleichen sind, wie sie auch im Polymeren A vorhanden sind; dies ist jedoch nicht zwingend erforderlich.

Die Verbindungen C sollen in der Vormischung in Form einer innigen Mischung mit dem Granulat vorliegen, d.h. z.B. in Form einer Hülle um jedes einzelne Granulatkorn.

Das Aufbringen der äußeren Hülle kann nach dem Fachmann an sich bekannten Verfahren wie Auftrommeln in einem Taumelmischer oder durch Hin- und Herrollen der Komponenten in einem Faß erfolgen. Die Temperatur der Aufbringung ist dabei so zu wählen, daß die Verbindungen der Formel X bzw. Y als äußere Hülle auf dem Polymergranulat des Polymeren A aufgebracht werden, d.h. sie sollte unterhalb des Schmelzpunkts des Granulats bleiben. Nach einer bevorzugten Verfahrensweise wird die äußere Hülle bei füllstoffhaltigen Polymergranulaten vor der Einarbeitung des Füllstoffs aufgebracht.

Das erfindungsgemäß vorbehandelte Polymergranulat zeichnet sich durch eine gute Verarbeitbarkeit, insbesondere auch bei hohem Füllstoffgehalt aus und eignet sich daher insbesondere zur Herstellung von Fasern, Folien, Formkörpern und Verbundwerkstoffen.

Beispiele

Es wurden folgende Komponenten eingesetzt

A) Polyarylethersulfon mit wiederkehrenden Einheiten der Formel

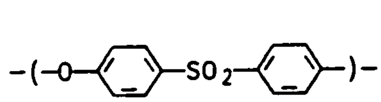

mit einer relativen Viskosität von 1,68 gemessen in Phenol/o-Dichlorbenzol (Gew. Verh. 1:1) (Ultrason® E3000 der BASF AG).

B) Glasfasern

C)$_1$

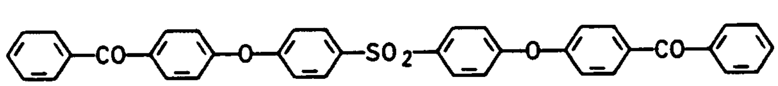

hergestellt durch Umsetzung von 4,4'-Dihydroxydiphenylsulfon mit 4-Fluorbenzophenon im Molver-

hältnis 1:2

C)2

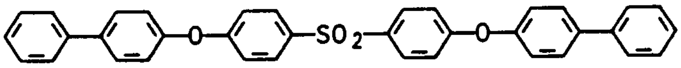

hergestellt durch Umsetzung von 4,4'-Dichlordiphenylsulfon mit 4-Hydroxydiphenyl im Molverhältnis 1:2

C)3

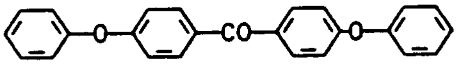

hergestellt durch Umsetzung von 4,4'-Difluorbenzophenon mit Phenol im Molverhältnis 1:2

C)4

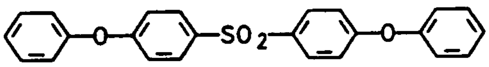

hergestellt durch Umsetzung von 4,4'-Dichlordiphenylsulfon mit Phenol im Molverhältnis 1:2

C)5

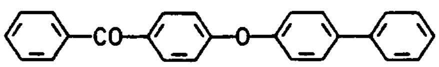

hergestellt durch Umsetzung von 4-Fluorbenzophenon mit 4-Hydroxydiphenyl

C)6

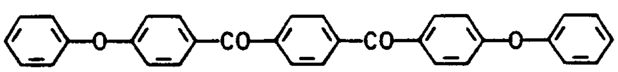

hergestellt durch Umsetzung von 1,4-Di(4-fluorphenylcarbonyl)benzol mit Phenol im Molverhältnis 1:2

C)7

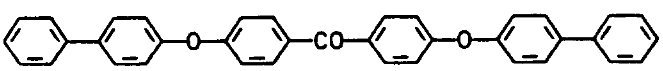

hergestellt durch Umsetzung von 4,4'-Difluorbenzophenon mit 4-Hydroxydiphenyl im Molverhältnis 1:2

C)8

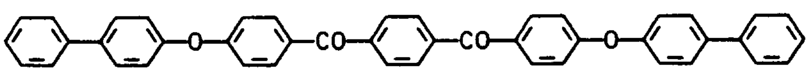

hergestellt durch Umsetzung von 1,4-Di(4-fluorphenylcarbonyl)benzol mit 4-Hydroxydiphenyl im Molverhältnis 1:2

C)9

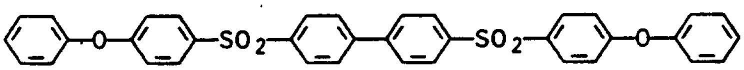

hergestellt durch Umsetzung von 4,4'-Di(4-chlorphenylsulfonyl)diphenyl mit Phenol im Molverhältnis 1:2.

Zunächst wurden auf 10 kg der Komponente A jeweils 30 g (0,3 Gew.-%) der Verbindungen C)1 bis C)9 durch Hin- und Herrollen in einem Faß bei Raumtemperatur als äußere Hülle aufgebracht. Anschließend wurde dieses Produkt zusammen mit 30 Gew.-% Glasfasern auf einem Doppelschneckenextruder (ZSK53) der Fa. Werner & Pfleiderer abgemischt und extrudiert. Dabei wurden bei einem konstanten Durchsatz von 30 kg/h die relative Leistungsaufnahme des Extruders und die minimal erforderliche Extrusionstemperatur gemessen.

Die Ergebnisse sind in der nachfolgenden Tabelle aufgeführt.

Tabelle

| | Verbindung C | aufgetrommelte Menge [%] | Relative Leistungsaufnahme des Extruders [%] | Extrusionstemperatur (minimal) [°C] |
|---|---|---|---|---|
| Vergleichsbeispiel: | - | - | 75 | 380 |
| Beispiel 1 | C)1 | 0,3 | 65 | 370 |
| Beispiel 2 | C)2 | 0,3 | 68 | 370 |
| Beispiel 3 | C)3 | 0,3 | 60 | 370 |
| Beispiel 4 | C)4 | 0,3 | 66 | 370 |
| Beispiel 5 | C)5 | 0,3 | 65 | 370 |
| Beispiel 6 | C)6 | 0,3 | 67 | 370 |
| Beispiel 7 | C)7 | 0,3 | 66 | 370 |
| Beispiel 8 | C)8 | 0,3 | 67 | 370 |
| Beispiel 9 | C)9 | 0,3 | 70 | 370 |

Es ist besonders hervorzuheben, daß beim Vergleichsbeispiel eine um 10°C höhere Extrusionstemperatur benötigt wurde, um eine einheitliche gute Durchmischung zu erzielen wie bei den übrigen Beispielen.

## Patentansprüche

1. Vormischung zur Herstellung von Formteilen, enthaltend

A) 40 - 99,95 Gew.-% eines Polymergranulats A auf der Basis eines Polyarylethersulfons, Polyaryletherketons, Polyimids, Polyamidimids oder Polyetherimids oder deren Mischungen,

B) bis zu 50 Gew.-% faser- oder teilchenförmige Füllstoffe B oder deren Mischungen,

und

C) 0,05 - 10 Gew.-% einer Verbindung C entweder der allgemeinen Formel X

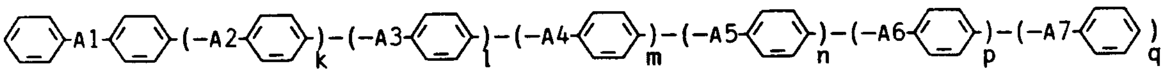

(X)

wobei A1 bis A7 gleich oder verschieden und unabhängig voneinander einen zweiwertigen Rest der Formeln

-CO-, -O-, -S-, $-SO_2-$, $-C(CH_3)_2-$,

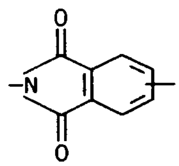 oder 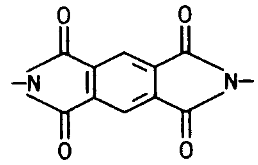

oder eine chemische Bindung bedeuten, wobei wenigstens einer der Reste A1 bis A7 keine chemische Bindung bedeutet, und k, l, m, n, p und q jeweils den Wert 0 oder 1 heben oder denen am aromatischen Kern substituierten $C_1$-$C_8$-Alkyl-, $C_1$-$C_8$-Alkoxy- oder Cyano-Derivaten, oder der allgemeinen Formel Y

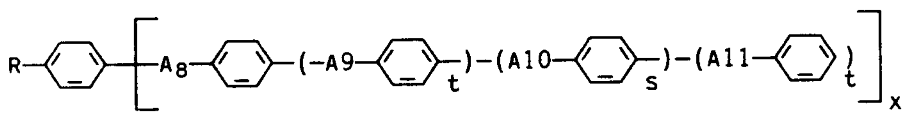 (Y)

wobei R für eine $C_1$-$C_8$-Alkylgruppe, eine $C_1$-$C_8$-Alkoxygruppe oder eine Cyanogruppe steht, A8 bis A11 die gleiche Bedeutung wie A1 bis A7 haben, wobei wenigstens einer der Reste A8 bis A11 keine chemische Bindung bedeutet, r, s, t den Wert 0 oder 1 haben und x den Wert 2, 3 oder 4 hat, oder deren Mischungen.

**2.** Vormischungen nach Anspruch 1, enthaltend als Komponente C eine Verbindung, ausgewählt aus der Gruppe:

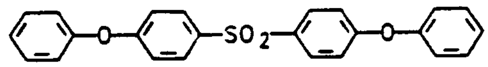

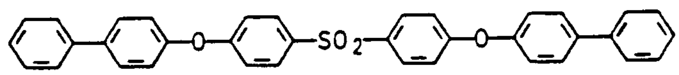

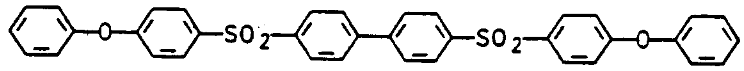

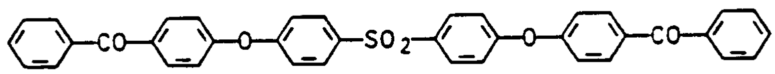

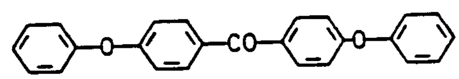

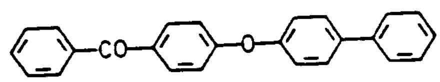

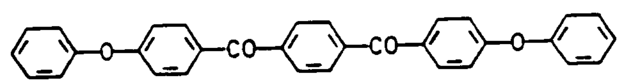

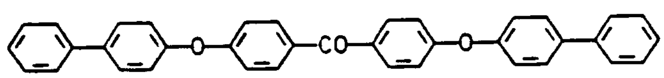

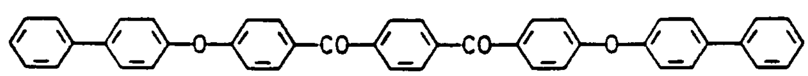

**3.** Vormischung nach Anspruch 1 oder 2, enthaltend ein Granulat einer Mischung zweier Polymerer A im Mengenverhältnis 5:95 bis 95:5.

**4.** Vormischung nach einem der Ansprüche 1 bis 3, enthaltend 5 bis 50 Gew.-% der Komponente B.

**5.** Verwendung der Vormischung nach einem der Ansprüche 1 bis 4 zur Herstellung von Formkörpern und Verbundwerkstoffen.

**6.** Formkörper aus der Mischung nach einem der Ansprüche 1 bis 4.

**Claims**

**1.** A premix for the production of moldings, containing
A) 40-99.95% by weight of polymer granules A based on a polyarylether sulfone, polyarylether ketone, polyimide, polyamidoimide or polyetherimide or a mixture thereof,
B) up to 50% by weight of fibrous or particulate fillers B or a mixture thereof
and

C) 0.05-10% by weight of a compound C, either of the general formula X

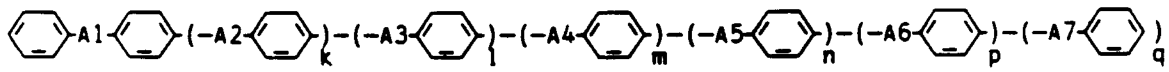

(X)

where A1 to A7 are identical or different and, independently of one another are each a divalent radical of the formula
-CO-, -O-, -S-, $-SO_2-$, $-C(CH_3)_2-$,

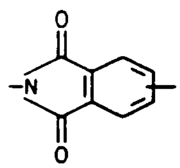

or

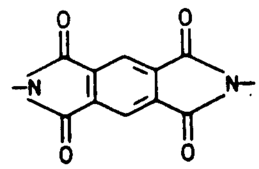

or a chemical bond, at least one of the radicals A1 to A7 not being a chemical bond, and k, l, m, n, p and q are each 0 or 1, or their $C_1$-$C_8$-alkyl, $C_1$-$C_8$-alkoxy or cyano derivatives substituted in the aromatic nucleus, or of the general formula Y

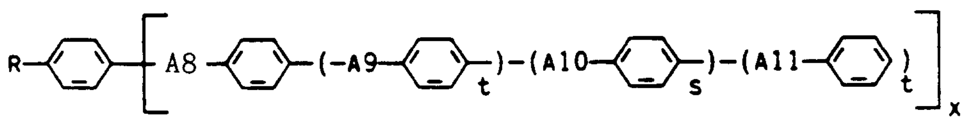

(Y)

where R is $C_1$-$C_8$-alkyl, $C_1$-$C_8$-alkoxy or cyano, A8 to A11 have the same meanings as A1 to A7, at least one of the radicals A8 to A11 not being a chemical bond, r, s and t are each 0 or 1 and x is 2, 3 or 4, or a mixture thereof.

**2.** A premix as claimed in claim 1, containing, as component C, a compound selected from the group consisting of:

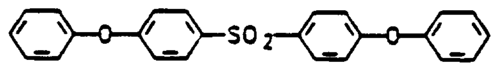

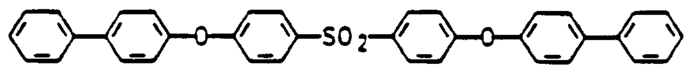

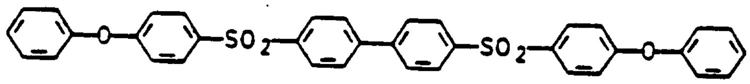

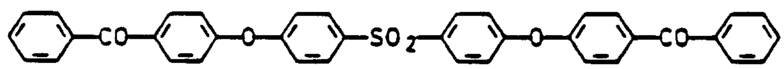

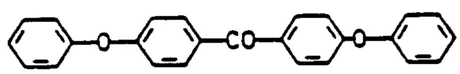

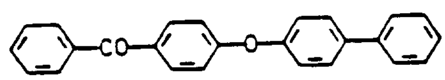

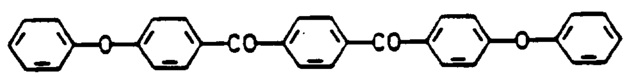

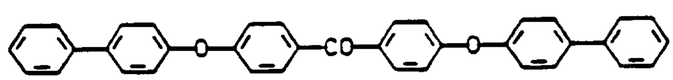

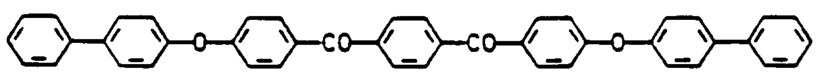

**3.** A premix as claimed in claim 1 or 2, containing granules of a mixture of two polymers A in a ratio of from 5 : 95 to 95 : 5.

**4.** A premix as claimed in any of claims 1 to 3, containing from 5 to 50% by weight of component B.

**5.** Use of a premix as claimed in any of claims 1 to 4 for the production of moldings and laminated materials.

**6.** A molding comprising a mixture as claimed in any of claims 1 to 4.

**Revendications**

**1.** Prémélange pour la fabrication de pièces moulées, contenant

A) de 40 à 99.95% en poids d'un granulé de polymère A à base d'une polyaryléthersulfone, d'une polyaryléthercétone, d'un polyimide, d'un polyamide-imide, d'un polyétherimide ou de mélanges de

ceux-ci,

B) jusqu'a 50% en poids de charges B en forme de fibres ou de particules ou de mélanges de celles-ci,

et

C) de 0,05 à 10% en poids d'un compose C de formule générale X

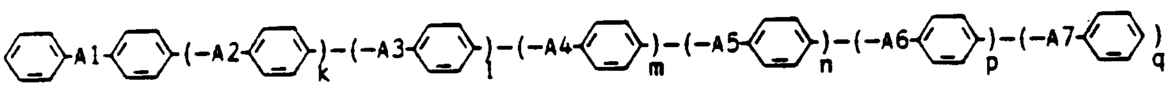

(X)

dans laquelle A1 a A7 sont identiques ou différents et représentent chacun, indépendamment les uns des autres, un reste bivalent de formule

-CO-, -O-, -S-, $-SO_2-$, $-C(CH_3)_2-$,

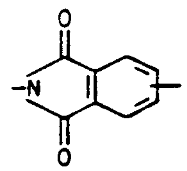 ou 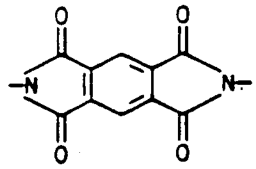

ou une liaison chimique, l'un au moins des restes A1 a A7 ne représentant pas une liaison chimique, et k, l, m, n, p et q ont chacun la valeur 0 ou 1, ou d'un dérivé d'un tel composé substitué sur le noyau aromatique par un reste alkyle en $C_1$-$C_8$, alcoxy en $C_1$-$C_8$ ou cyano,

ou d'un composé C de formule générale Y

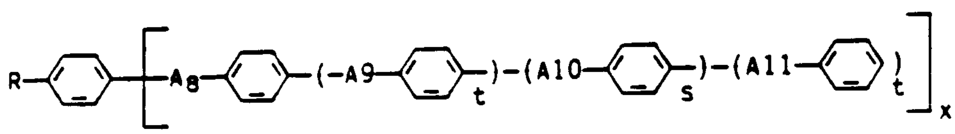 (Y)

dans laquelle R est mis pour un groupement alkyle en $C_1$-$C_8$, un groupement alcoxy en $C_1$-$C_8$ ou un groupement cyano, A8 à A11 ont les mêmes significations que A1 à A7, l'un au moins des restes A8 à A11 ne représentant pas une liaison chimique, r, s, t ont la valeur 0 ou 1 et x a la valeur 2, 3 ou 4, ou de mélanges de ces composés.

**2.** Prémélanges selon la revendication 1, contenant, comme composant C, un composé choisi dans le groupe

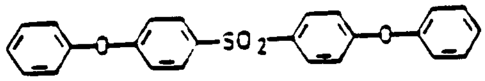

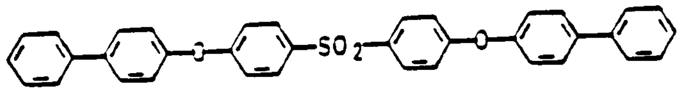

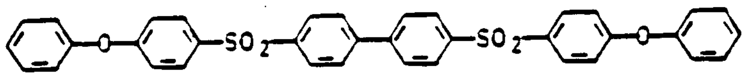

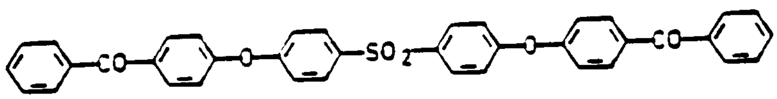

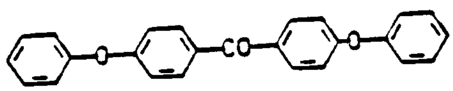

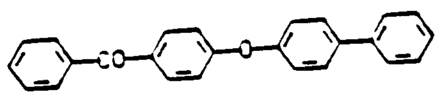

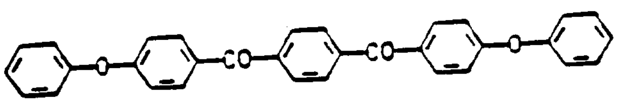

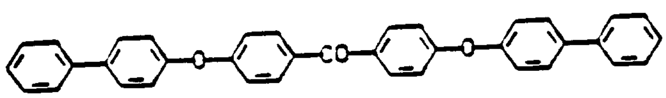

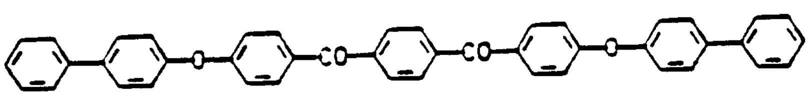

**3.** Prémélange selon la revendication 1 ou 2, contenant un granulé d'un mélange de deux polymères A dans une proportion de 5:95 à 95:5.

**4.** Prémélange selon l'une quelconque des revendications 1 à 3, contenant 5 à 50% en poids du composant B.

**5.** Utilisation du prémélange selon l'une quelconque des revendications 1 à 4 pour la fabrication de pièces moulées et de matériaux composites.

**6.** Pièce moulée à partir du mèlange selon l'une quelconque des revendications 1 à 4.